# EUROPÄISCHE PATENTSCHRIFT

(11) **EP 4 190 634 B1**
(45) Veröffentlichungstag und Bekanntmachung des Hinweises auf die Patenterteilung: **27.03.2024**
(21) Anmeldenummer: 22208837.9
(22) Anmeldetag: 22.11.2022
(51) Int. Cl.: B60P 3/40

(54) **VORRICHTUNG ZUM HALTEN EINES ENDES EINES LÄNGLICHEN OBJEKTS, INSBESONDERE EINER SELBSTTRAGENDEN LAST, SOWIE EIN DIESE VORRICHTUNG VERWENDENDES FAHRZEUG**
DEVICE FOR HOLDING AN END OF AN ELONGATED OBJECT, IN PARTICULAR A SELF-SUPPORTING LOAD, AND A VEHICLE USING SAID DEVICE
DISPOSITIF DE MAINTIEN D'UNE EXTRÉMITÉ D'UN OBJET ALLONGÉ, EN PARTICULIER D'UNE CHARGE AUTOPORTANTE, ET VÉHICULE UTILISANT CE DISPOSITIF

(30) Priorität: 02.12.2021 DE 102021005979; 02.12.2021 DE 202021003674 U
(43) Veröffentlichungstag der Anmeldung: 07.06.2023
(73) Patentinhaber: Scheuerle Fahrzeugfabrik GmbH, 74629 Pfedelbach (DE)
(72) Erfinder: Schmidt, Oliver, 74629 Pfedelbach (DE); Ziegler, Jochen, 74629 Pfedelbach (DE)
(74) Vertreter: Ullrich & Naumann PartG mbB

(56) Entgegenhaltungen:
- DE-U1-202019 001 482
- US-A1- 2017 267 149

## Beschreibung

Die Erfindung betrifft eine Vorrichtung zum Halten eines Endes eines länglichen Objekts, insbesondere einer selbsttragenden Last, die ein Grundgestell aufweist, an dem eine Halterung, an welcher das längliche Objekt festlegbar ist, schwenkbar angeordnet ist, und die mindestens eine Betätigungseinrichtung aufweist, durch welche die Halterung relativ zum Grundgestell schwenkbar ist, sowie ein Fahrzeug zum Transport eines länglichen Objekts, welches eine Vorrichtung zum Halten eines Endes eines länglichen Objekts aufweist.

Eine derartige Vorrichtung sowie ein diese Vorrichtung verwendendes Fahrzeug sind aus der DE 20 2019 001 482 U1 der Anmelderin bekannt. Um eine asymmetrische Gewichtsverteilung des zu transportierenden länglichen Objekts zumindest teilweise kompensieren zu können, schlägt diese Druckschrift vor, dass die Vorrichtung einen das längliche Objekt haltenden, an der Halterung angeordneten Adapter aufweist, wobei der Adapter in mindestens einer außermittigen Position an der Halterung anordbar ist. Es ist dadurch möglich, das zu transportierende längliche Objekt derart anzuordnen, dass sein Gewichtsschwerpunkt nahe an der Mittelebene der bekannten Vorrichtung liegt, so dass hierdurch Kippkräfte und/oder Kippmomente reduziert werden, die durch eine asymmetrische Gewichtsverteilung des zu transportierenden länglichen Objekts bewirkt werden, wodurch die Standsicherheit der Vorrichtung sowie insbesondere diejenige eines die bekannte Vorrichtung verwendenden Transportfahrzeugs erhöht und somit die Transportsicherheit verbessert wird.

Diese Standsicherheit wird nicht nur durch eine asymmetrische Gewichtsverteilung des zu transportierenden länglichen Objekts beeinflusst, sondern auch durch fahrdynamische Einflüsse während des Transportvorgangs z. B. durch die Neigung der Fahrbahn, bei einer Kurvenfahrt auftretende Zentrifugalkräfte, um nur einige Beispiele zu nennen. Da derartige längliche Objekte wie z. B. Rotorblätter oder Turmsegmente einer Windkraftanlage eine große Windangriffsfläche aufweisen, verursachen auch von außen auf das zu transportierende Objekt einwirkende Kräfte wie z. B. eine Luftströmung, unerwünschte Kippkräfte und/oder Kippmomente, welche die Standsicherheit der Vorrichtung und eines sie verwendenden Fahrzeugs beeinträchtigen können. Eine nicht ausgeglichene Beaufschlagung des zu transportierenden länglichen Objekts mit einer hohen Windkraft kann daher zu einer Asymmetrie der Belastung des die bekannte Vorrichtung verwendenden Fahrzeugs führen, wodurch die Transportsicherheit vermindert wird. Aus den oben ausgeführten Gründen ist es also wichtig, eine Asymmetrie in der Belastung des Transportfahrzeugs zu vermeiden, indem sowohl zu Beginn einer Transportfahrt als auch während derselben der Schwerpunkt des zu transportierenden länglichen Objekts nahe der Mitte des Transportfahrzeugs liegt.

Aus der EP 1 558 464 B1 ist eine Vorrichtung zum Halten eines Endes einer selbsttragenden Last, insbesondere eines Mastabschnitts einer Windturbine, bekannt, die ein Fahrwerk aufweist, welches wenigstens eine untere Stütze und wenigstens eine obere Stütze, die in einer Vertikalebene einen spitzen Winkel miteinander einschließen, besitzt. Ein Ende jeder Stütze ist mit dem Fahrwerk verbunden, wobei das andere Ende der wenigstens einen unteren Stütze geeignet ist, auf einen unteren Teil des Endes des Last anzugreifen. Das andere Ende der wenigstens einen oberen Stütze ist derart ausgebildet, dass es an einem oberen Teil des Endes der Last angreifen kann. Wenigstens eine der beiden Stützen ist in ihrer Längsrichtung einstellbar, so dass sich die oberen und unteren Stützen relativ zueinander zu dem Zweck bewegen können, den zwischen ihnen eingeschlossenen Winkel durch eine hydraulische Betätigungseinrichtung, die zwischen den Stützen angeordnet ist, auf die Abmessungen des Endes der Last einzustellen. Die hydraulische Betätigungseinrichtung weist wenigstens einen Hydraulikzylinder auf, wobei ein Ende des Hydraulikzylinders mit der unteren Stütze und ein anderes Ende am anderen Ende der oberen Stütze angreift. Die beiden unteren Stützen der bekannten Vorrichtung sind um eine horizontale Achse schwenkbar auf einem Fahrgestell gelagert, so dass durch entsprechende Mittel die unteren Stützen und somit die mit diesen verbundenen oberen Stützen durch die vorgenannte Einrichtung angehoben und abgesenkt werden können. Um das Ende einer Last aufnehmen zu können, ist es erforderlich, dass am Ende dieser Last entsprechende Aufnahmen vorhanden sind. Die beiden unteren Stützen weisen an ihren Enden zu den beiden an der Last vorgesehenen Aufnahmen komplementär ausgebildete Aufnahmeelemente und die oberen Stütze weist ein weiteres Aufnahmeelement auf, welches komplementär zu einer weiteren Aufnahme, die am Ende der zu bewegenden Last angeordnet ist, ausgebildet ist. Um nun die zu transportierende Last in der bekannten Vorrichtung aufzunehmen, wird die Vorrichtung von dem sie tragenden Fahrzeug vor das Ende der aufzunehmenden Last positioniert. Dann werden die beiden unteren Stützen soweit angehoben, bis ihre Aufnahmen auf gleicher Höhe wie die am Ende der zu transportierenden Last vorgesehenen Aufnahmen liegen. Dann wird das Fahrzeug und somit die an diesem angeordnete Vorrichtung zu dem Ende der zu transportierenden Last bewegt, bis die Aufnahmeelemente der beiden Stützen in die entsprechenden Aufnahmen der Last eingreifen. Dann wird durch die bei der bekannten Vorrichtung vorgesehene Betätigungseinrichtung angehoben und gleichzeitig wird diese Stütze in ihrer Länge verstellt. Das Aufnahmeelement der oberen Stütze wird derart zu der an der zu transportierenden Last angeordneten weiteren Aufnahme gefahren, bis das Aufnahmeelement der oberen Stütze in diese Aufnahme eingreifen kann. Nach Beendigung dieses Vorgangs greifen somit die beiden Aufnahmeelemente der beiden unteren Stützen in die unteren Aufnahmen der Last und das weitere Aufnahmeelement der oberen Stütze in die weitere Aufnahme der Last ein. Die zu transportierende Last ist somit mit der Vorrichtung verbunden und kann mit dem die bekannte Vorrichtung verwendenden Fahrzeug transportiert werden. Die zu transportierenden länglichen Objekte können einen asymmetrischen Querschnitt aufweisen, was zur Folge hat, dass der Gewichtsschwerpunkt des zu transportierenden länglichen Objekts nicht mit seiner Längsachse zusammenfällt. Wird nun das längliche Objekt wie vorstehend beschrieben in der bekannten Vorrichtung aufgenommen, so führt der außerhalb der Längsachse des länglichen Objekts liegende Gewichtsschwerpunkt dazu, dass dieser Schwerpunkt auch außerhalb der Mittelebene der Halterung und somit der diese Halterung verwendeten Vorrichtung liegt. Diese außermittige Lage des Gewichtsschwerpunkt führt in nachteiliger Art und Weise dazu, dass beim Transport des länglichen Objekts Kippkräfte und/oder Kippmomente auftreten können.

Aus der DE 20 2018 106 492 U1 ist ein Fahrzeug zum Transportieren eines langen Transportguts wie beispielsweise eines Flügels von Windkraftanlagen bekannt, welches einen vorderen Fahrwerkabschnitt und einen in Fahrzeuglängsrichtung dazu beabstandeten hinteren Fahrwerkabschnitt aufweist, wobei der vordere Fahrwerkabschnitt und der hintere Fahrwerkabschnitt mittels eines teleskopierbaren Längsträgers miteinander verbunden sind. Der vordere Fahrwerkabschnitt ist mit einem verschwenkbaren Adapter zur Aufnahme des Windflügels versehen. Dieser ist in einem oberen Bereich an einem Vertikalträger drehbar gelagert, dessen Basis zwischen einem vorderen Teil und einem hinteren Teil des vorderen Fahrwerkabschnitts gehalten ist. Zur Stabilisierung des Vertikalträgers sind zwei Stützen vorgesehen, deren oberes Ende jeweils im oberen Bereich des Vertikalträgers angreift und deren unteres Ende jeweils in einem vorderen Bereich des vorderen Teils des vorderen Fahrwerkabschnitts verankert ist. Zur Verschwenkung des Adapters ist ein hydraulischer Schwenkantrieb vorgesehen, der in einem unteren Bereich des verschwenkbaren Adapters angreift.

Es ist daher Aufgabe der vorliegenden Erfindung, eine Vorrichtung der eingangs genannten Art derart weiterzubilden, dass durch die zu transportierende Last selbst und/oder durch auf diese Last einwirkende äußere Kräfte bewirkte Kippkräfte und/oder Kippmomente erfasst werden können. Außerdem soll ein für die erfindungsgemäße Vorrichtung geeignetes Fahrzeug geschaffen werden.

Diese Aufgabe wird durch eine Vorrichtung gemäß den kennzeichnenden Merkmalen des Anspruchs 1 und durch ein Fahrzeug mit den kennzeichnenden Merkmalen des Anspruchs 11 gelöst.

Durch die erfindungsgemäßen Maßnahmen wird in vorteilhafter Art und Weise eine Vorrichtung zum Transport eines länglichen Objekts sowie ein diese Vorrichtung verwendendes Fahrzeug geschaffen, welches sich dadurch auszeichnet, dass eine asymmetrische Belastung, welche insbesondere durch das zu transportierende längliche Objekt hervorgerufen wird, leicht erfasst und folglich korrigiert werden kann. Indem nun erfindungsgemäß vorgesehen ist, dass an mindestens einer Messstelle mindestens einer Messposition ein Belastungssensor vorgesehen ist, kann in einfacher Art und Weise eine Asymmetrie der Belastung der Vorrichtung und somit des Fahrzeugs festgestellt werden. Vorzugsweise ist hierbei vorgesehen, dass der Belastungssensor einen Messbolzen aufweist, welcher die auf die jeweilige Messstelle einwirkende Belastung erfasst. Eine derartige Maßnahme besitzt den Vorteil einer besonders einfachen konstruktiven Ausgestaltung.

Eine vorteilhafte Weiterbildung der Erfindung sieht vor, dass die Vorrichtung einen das längliche Objekt haltenden, an der Halterung angeordneten Adapter aufweist, und dass der Adapter in mindestens einer außermittigen Position an der Halterung anordbar ist.

Das erfindungsgemäße Fahrzeug zum Transport eines länglichen Objekts zeichnet sich dadurch aus, dass die erfindungsgemäße Vorrichtung verwendet wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine schematische Darstellung eines Fahrzeug-Verbunds zum Transportieren eines länglichen Objekts, insbesondere einer selbsttragenden Last,
- Figur 2: ein Ausführungsbeispiel einer Vorrichtung zum Halten eines Endes des länglichen Objekts in einer abgesenkten Stellung,
- Figur 3: das Ausführungsbeispiel der Vorrichtung in einer angehobenen Stellung,
- Figur 4: eine Ansicht des Ausführungsbeispiels aus einer der Last abgewandten Blickrichtung,
- Figur 5: ein Detail A der Figur 4,
- Figur 6: eine Seitenansicht der Vorrichtung gemäß Figur 2,
- Figur 7: ein Detail B der Figur 6,
- Figur 8: ein Ausführungsbeispiel eines Adapters der Vorrichtung,
- Figur 9: ein Detail A der Figur 8.

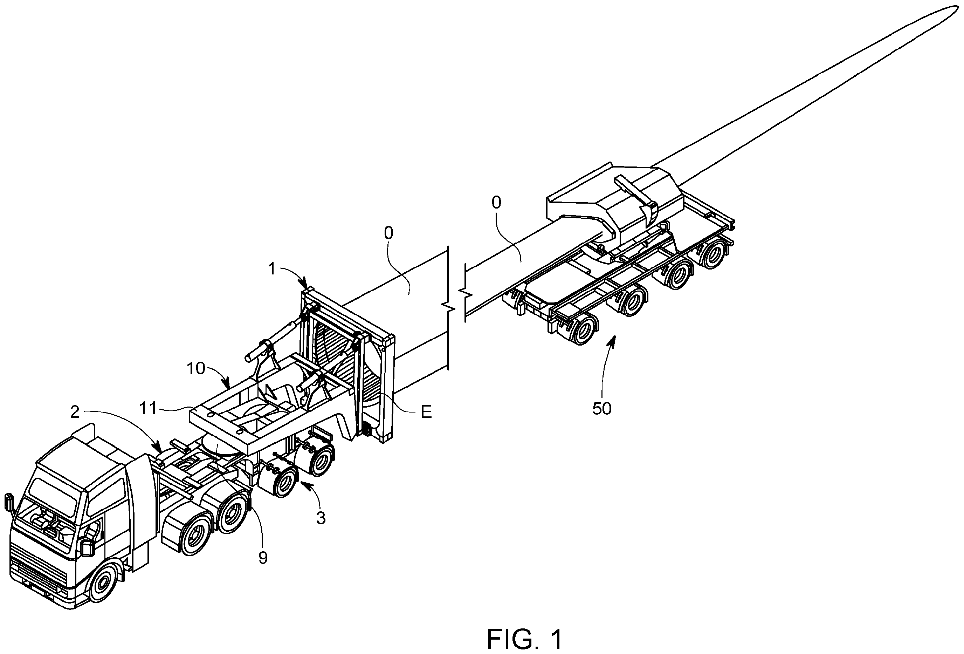

In Figur 1 ist ein allgemein mit 1 bezeichneter Fahrzeug-Verbund dargestellt, wie er weithin verbreitet zum Transport eines länglichen Objekts O, insbesondere einer selbsttragenden Last wie eines Mastabschnitts eines Rotorblatts einer Windturbine, verwendet wird. Der Fahrzeug-Verbund 1 weist ein an und für sich bekanntes und daher nicht mehr näher beschriebenes Zugfahrzeug 2 auf, an dem eine allgemein mit 10 bezeichnete Vorrichtung zum Halten eines Endes E des länglichen Objekts O, wie z. B. eines Rotorblatts oder eines Mastabschnitts einer Windturbine, befestigbar ist. Der Fahrzeug-Verbund 1 besitzt im hier beschriebenen Fall des Weiteren ein weiteres Fahrzeug 50, welches exemplarisch als nachlaufender Anhänger ausgebildet ist, auf dem das zu transportierende Objekt O aufliegt. Ein derartiger Fahrzeug-Verbund 1 ist bekannt und muss daher nicht mehr näher beschrieben werden.

Die Vorrichtung 10 kann unmittelbar am Zugfahrzeug 2 angebracht sein. Es ist aber auch möglich, dass diese - wie beim hier beschriebenen Ausführungsbeispiel - auf einem Zwischenwagen 3 angeordnet ist. Da es für das hier beschriebene Ausführungsbeispiel ohne Bedeutung ist, ob die Vorrichtung 10 direkt am Zugfahrzeug 2 oder auf einem Zwischenwagen 3 angeordnet ist, orientiert sich nachfolgende Beschreibung an dem in den Figuren dargestellten Fall.

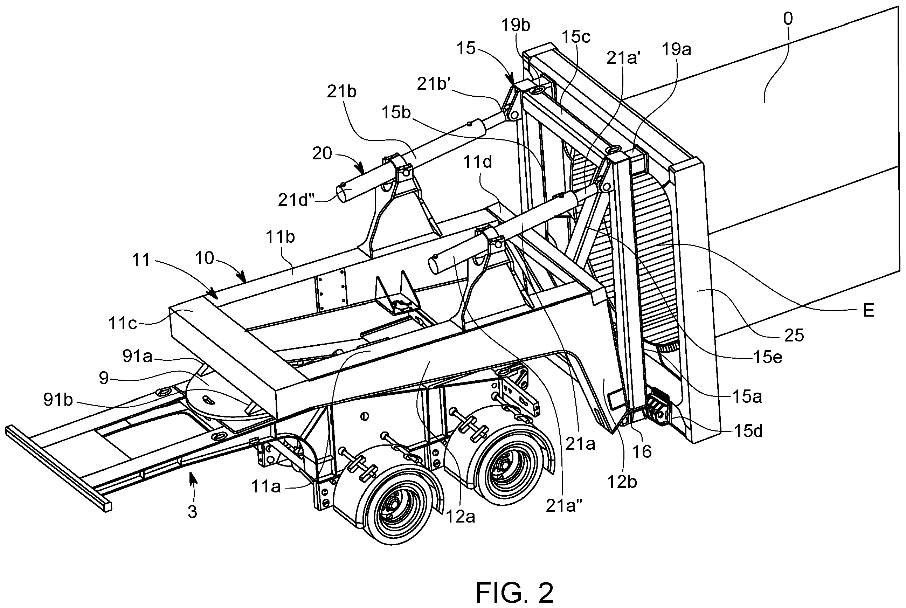

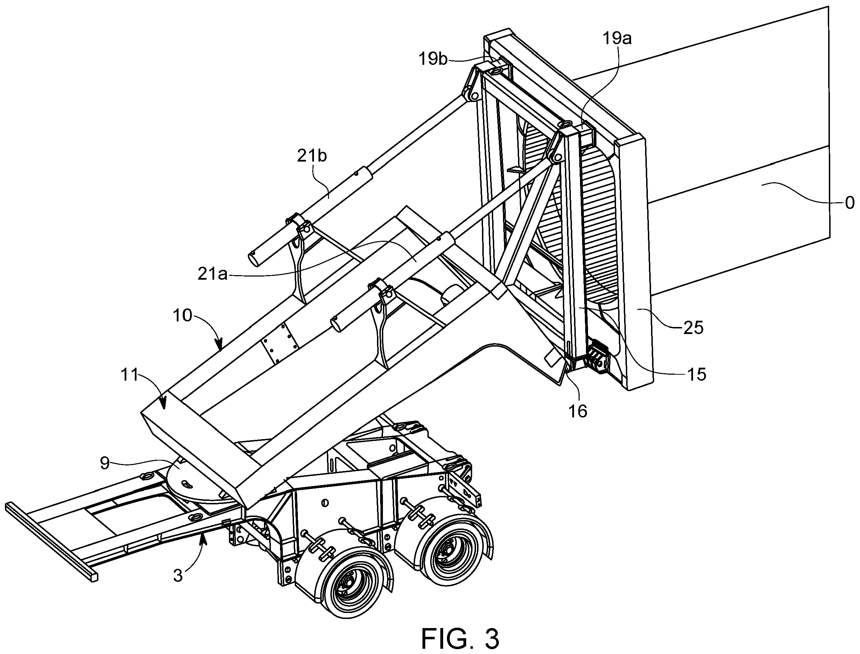

Die Vorrichtung 10 weist ein Grundgestell 11 auf, welches durch eine bekannte und daher nicht mehr näher beschriebene Betätigungseinrichtung anhebbar und absenkbar ist. Die Figur 2 zeigt die Vorrichtung 10 in ihrer abgesenkten und die Figur 3 in ihrer angehobenen Stellung. Das Grundgestell 11 weist zwei Längsträger 11a und 11b auf, welche durch Querträger 11c und 11d miteinander verbunden sind. Vorzugsweise ist jeder der beiden Längsträger 11a, 11b L-förmig ausgebildet und weist jeweils einen ersten Abschnitt 12a und einen hierzu geneigt verlaufenden zweiten Abschnitt 12b auf. Vorzugsweise ist vorgesehen, dass der Winkel zwischen den beiden Abschnitten 12a und 12b ein stumpfer Winkel einschließlich 90° ist.

Der Rahmen 11 ist über eine Drehanordnung 9 auf dem Zwischenwagen 3 angeordnet, so dass der Rahmen 11 um eine Hochachse relativ zum Zwischenwagen 3 schwenkbar ist. Dem Fachmann ist aber aus nachfolgender Beschreibung ersichtlich, dass diese Drehbarkeit des Rahmens 11 um die Hochachse relativ zum Zwischenwagen 3 bzw. zu einem Fahrzeug nicht zwingend ist. Vielmehr ist es ausreichend, dass der Rahmen 11 mit dem Zwischenwagen 3 oder allgemein mit einem Fahrzeug - drehbar oder nicht-drehbar - verbunden ist. Dem Fachmann sind aber aus der nachfolgenden Beschreibung diejenigen Modifikationen, die er vornehmen muss, wenn er anstelle der in den Figuren gezeigten Drehanordnung 9 eine andere Art der Befestigung des Rahmens 11 am Zwischenwagen 3 wählen möchte. Die nachfolgende Beschreibung geht daher - ohne dass dies die Allgemeinheit dieser Erläuterungen einschränkt - davon aus, dass der Rahmen 11 auf einer Drehanordnung 9 angeordnet ist, welche ihrerseits am Zwischenwagen 3 drehbar gelagert ist.

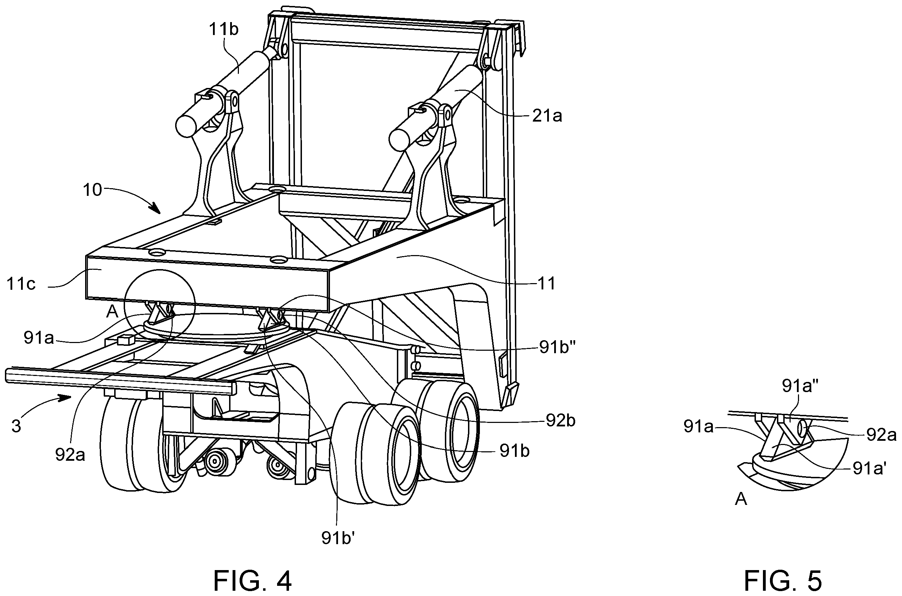

Zwischen der Drehanordnung 9 und dem Rahmen 11 sind - wie am besten aus den Figuren 4 und 5 ersichtlich ist - zwei Auflager 91a und 91b vorgesehen, mittels derer der Rahmen 11 auf der Drehanordnung 9 und somit am Zwischenwagen 3 gelagert ist. Im hier beschriebenen Ausführungsbeispiel ist vorgesehen, dass der Querträger 11c des Rahmens 11 schwenkbar auf den beiden Auflagern 91a und 91b angeordnet ist, so dass der Rahmen 11 um einen durch die beiden Auflager 91a und 91b vorgegebene Drehachse verschwenkbar und insbesondere anhebbar und absenkbar ist. Im hier beschriebenen Ausführungsbeispiel weist jedes Auflager 91a, 91b ein mit der Drehanordnung 9 verbundenes Unterteil 91a`, 91b' sowie ein mit dem Rahmen 11 verbundenes Oberteil 91a", 91b" auf. Das Unterteil 91a' bzw. 91b' ist mit dem Oberteil 91a", 91b" jeweils über einen Bolzen 92a bzw. 92b verbunden.

Es ist nun vorgesehen, dass mindestens eines oder vorzugsweise beide Auflager 91a, 91 b jeweils als ein Belastungssensor ausgebildet ist oder einen derartigen aufweisen, so dass durch den oder die beiden Belastungssensoren die Verteilung der auf die Drehanordnung 9 und somit den Zwischenwagen 3 einwirkenden Last erfassbar ist. Hierdurch können leicht Asymmetrien der Beladung festgestellt werden, welche zu Kippkräften und/oder Kippmomenten führen können.

Gemäß einer bevorzugten Ausgestaltung dieses Belastungssensors ist vorgesehen, dass mindestens einer der Bolzen 92a oder 92b als ein Messbolzen ausgebildet ist. Dieser mindestens eine Messbolzen erfasst die auf die jeweiligen Auflager 91a und/oder 91b einwirkende Kraft.

Die vorgenannte Ausgestaltung erlaubt es in vorteilhafter Art und Weise, an einer oder zwei Messstellen, nämlich am ersten Auflager 91a und/oder am zweiten Auflager 91b, einer ersten Messposition - der durch die Auflager 91a, 91b festgelegten Drehachse des Rahmens 11 um die Drehanordnung 9 - die Querverteilung der Belastung, welche durch das zu transportierende längliche Objekt O bewirkt wird, zu erfassen.

Bei der vorstehend ausgeführten Beschreibung des Ausführungsbeispiels wurde davon ausgegangen, dass die Erfassung einer Belastungsasymmetrie mittels der durch die Auflager 91a und/oder 91b repräsentierten mindestens einen Messstelle einer ersten Messposition erfasst wird. Dies ist aber nicht zwingend. Ergänzend zu der vorgenannten Maßnahme oder anstelle derselben kann vorgesehen sein, dass mindestens eine weitere Messposition mit mindestens einer weiteren Messstelle zur Erfassung der Asymmetrie der Beladung ausgebildet ist.

Die Sensorsignale des oder der Belastungssensoren werden dann über entsprechende Datenleitungen (nicht gezeigt) einer Steuer- und/oder Auswerteeinrichtung (ebenfalls nicht gezeigt) zugeführt und in dieser ausgewertet. Die Steuer- und/oder Auswerteeinrichtung erzeugt dann ein Anzeigesignal, welches einer Anzeigeeinheit (nicht gezeigt) zugeführt wird, welches die asymmetrische Belastung der beiden Belastungssensoren und/oder daraus abgeleitete Kenngrößen und/oder Parameter anzeigt. Es ist aber auch möglich, dass die Steuer- und/oder Auswerteeinrichtung anstelle dieses Anzeigesignals und/oder zusätzlich hierzu ein Steuersignal erzeugt, welches zum zumindest teilweisen Ausgleich eine Kompensationsbewegung der Vorrichtung 10 und/oder des Fahrzeugs bewirkt. Dies kann z. B. - wie weiter unten beschrieben - eine Verschiebung eines das längliche Objekt O aufnehmenden Adapters 25 sein. Es ist aber auch möglich, anstelle dieser Kompensationsmaßnahme einer Komponente der Vorrichtung 10 eine Kompensationsbewegung der Vorrichtung 10 selbst und/oder eine Kompensationsbewegung des Fahrzeugs 1 durchzuführen. Als Beispiel für eine derartige Kompensationsmaßnahme in Bezug auf die Vorrichtung 10 soll aufgeführt werden, dass hierzu das Grundgestell 11 verschiebbar auf dem Zwischenwagen 3 angeordnet ist, z. B. in dem der Rahmen 11 verschiebbar auf dem Zwischenwagen 3 gelagert ist. Eine Kompensationsbewegung des Fahrzeugs selbst kann z. B. dadurch durchgeführt werden, dass das die Vorrichtung 10 verwendende Fahrzeug verschiebbare Gewichte, um nur ein Beispiel zu nennen, aufweist.

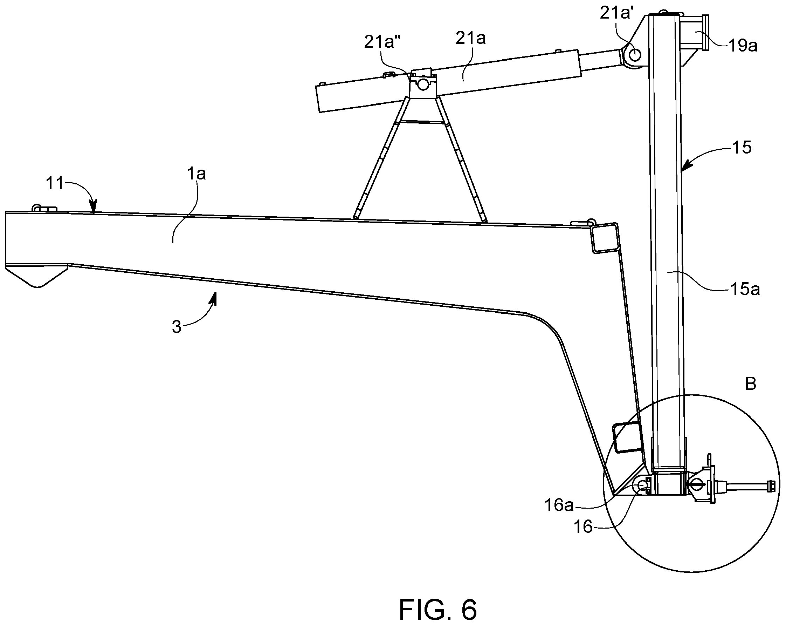

Am Grundgestell 11 und insbesondere an den beiden Längsträgern 11a, 11b ist eine im hier beschriebenen Ausführungsbeispiel als Rahmen ausgebildete Halterung 15 vorgesehen, die über zwei Gelenke 16 schwenkbar am Grundgestell 11 angeordnet ist. Wie am besten aus Figur 6 ersichtlich ist, weist jedes der beiden Gelenke 16 einen Bolzen 16a auf, so dass die Halterung 15 um die Bolzen 16a gegenüber dem Grundgestell 11 verschwenkt werden kann. Optional kann nun vorgesehen sein, dass auch diese Bolzen 16a - wie die die Auflager 91a, 91b mit dem Querträger 11c des Grundgestells 11 verbindenden Bolzen als Belastungssensoren, insbesondere als Messbolzen, ausgebildet sind, deren Sensorsignale zu der Steuer- und/oder Auswerteeinrichtung geleitet und wie vorstehend beschrieben verarbeitet werden. Durch die Messbolzen eines oder beider Gelenke 16 wird somit mindestens eine Messstelle einer zweiten Messposition ausgebildet, durch welche eine Asymmetrie der durch das längliche Objekt O hervorgerufenen Belastung erfasst werden kann. Dem Fachmann ist ersichtlich, dass diese Maßnahme - Ausgestaltung eines oder beider Gelenke 16 als ein Belastungssensor - zusätzlich zu der eingangs beschriebenen Maßnahme, nämlich die Querverteilung der Belastung durch die Auflager 91a, 91b zu bestimmen, vorgesehen sein kann, so dass also die Querverteilung der Belastung sowohl an den Auflagern 91a, 91b als auch an den Gelenken 16 erfasst wird. Es ist aber auch möglich, dieses Querverteilung der Belastung der Vorrichtung 10 und somit des Transportfahrzeugs 1 nur an mindestens einer Messstelle der zweiten Messposition, also an der Position eines oder beider Gelenke 16 zu erfassen.

Die Verwendung eines Rahmens zur Ausbildung der Halterung 15 wird zwar bevorzugt, ist aber nicht zwingend. Anstelle des Rahmens kann auch eine Platte oder eine ähnliche Konstruktion verwendet werden. Im folgendem soll aber dieses Ausführungsbeispiel anhand des in den Figuren dargestellten Rahmens beschrieben werden, die dazu gemachten Ausführungen gelten für die entsprechende Halterung 15 analog. Der Rahmen weist zwei Längsträger 15a und 15b und zwei diese beiden Längsträger 15a, 15b verbindende Querträger 15c, 15d auf. Vorzugsweise kann vorgesehen sein, dass zur Versteifung des Rahmens ein Stützträger 15e vorgesehen ist. Dem Fachmann ist aus der nachfolgenden Beschreibung ersichtlich, dass es für gewisse Anwendungsfälle durchaus ausreichend ist, wenn der Rahmen nur die beiden Längsträger 15a und 15b aufweist, die Querträger 15c und 15d sowie der Stützträger 15e sind zwar vorteilhaft, aber nicht zwingend.

Am Grundgestell 11 der Vorrichtung 10 ist eine Betätigungseinrichtung 20 vorgesehen, durch welche der Rahmen um die durch die beiden Gelenke 16 definierte Schwenkachse schwenkbar ist. Beim beschriebenen Ausführungsbeispiel weist die Betätigungseinrichtung 20 zwei Teleskopzylinder 21a, 21b, vorzugsweise Hydraulikzylinder, auf, die mit ihrem ersten Ende 21a' und 21b' am Rahmen angreifen und deren zweite Enden 21a" und 21b" am Grundgestell 11 der Vorrichtung 10 festgelegt sind. Durch eine Längenveränderung der Teleskopzylinder 21a, 21b ist somit die Halterung 15, hier also der Rahmen, um die Gelenke 16 relativ zum Grundgestell 11 schwenkbar. Das Grundgestell 11 der Vorrichtung 10 und somit der Rahmen kann durch eine an und für sich bekannte und daher in den Figuren nicht gezeigte Einrichtung angehoben und abgesenkt werden.

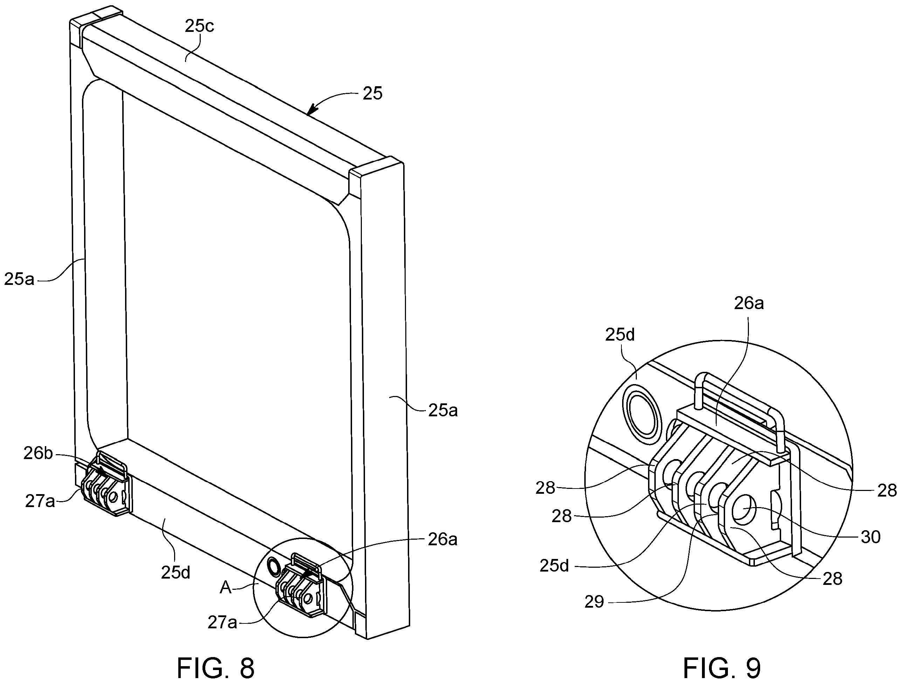

Der Adapter 25 ist am Rahmen der Vorrichtung 10 - wie nachstehend beschrieben - verschiebbar und vorzugsweise verschwenkbar angeordnet. Dieser Adapter 25 ist in Figur 8 dargestellt und hier rahmenartig ausgebildet. Er weist Längsträger 25a und 25b sowie Querträger 25c und 25d auf. Der Adapter 25 ist derart ausgebildet, dass er am Ende E des länglichen Objekts O befestigbar ist. Die genaue Art und Weise der Befestigung des Adapters 25 am Ende E des länglichen Objekts O ist hier ohne Bedeutung. Im europäischen Patent EP 2 719 578 B1 der Anmelderin ist eine bevorzugte Ausgestaltung eines derartigen Adapters beschrieben.

Wie aus den vorgenannten Figuren ersichtlich ist, sind vorzugsweise der Adapter 25 und die Halterung 15, im hier gezeigten Ausführungsbeispiel also der Rahmen, in der Vorrichtung 1 durch eine Schwenkeinrichtung 26 miteinander verbunden, so dass der Adapter 25 relativ zum Rahmen um eine Schwenkachse beweglich ist. In dem gezeigten Fall weist die Schwenkeinrichtung 26 zwei Schwenkeinheiten 26a und 26b auf, wobei jede Schwenkeinheiten 26a, 26b zwei Schwenkelemente 27a und 27b besitzt, die jeweils über einen Bolzen 27c verbunden sind. Im beschriebenen Ausführungsbeispiel sind im unteren Bereich des Adapters 25, hier am unteren Querträger 25d, die beiden Schwenkelemente 27a der Schwenkeinheiten 26a und 26b vorgesehen, welche mit den zu diesen komplementär ausgebildeten Schwenkelementen 27b der Schwenkeinheiten 26a und 26b zusammenwirken, welche am Rahmen angeordnet sind.

Es kann nun vorgesehen sein, dass auch diese Schwenkeinrichtung 26 zur Erfassung der auf die Vorrichtung 10 und somit auf das Fahrzeug 1 einwirkenden - asymmetrischen - Belastung durch das zu transportierende längliche Objekt O dient. Hierzu ist vorgesehen, dass eine oder beide Schwenkeinheiten 26a, 26b als Belastungssensor ausgebildet sind oder einen derartigen Belastungssensor aufweisen, genauso wie dies vorstehend bei den Auflagern 91a, 91b und/oder den Gelenken 16 beschrieben wurde. Auch hier wird wieder bevorzugt, dass in diesem Fall der Bolzen 27c einer oder beider Schwenkeinheiten 26a, 26b als ein Messbolzen ausgeführt ist. Die Sensorsignale werden wieder zu der Steuer- und oder Auswerteeinrichtung geleitet und wie vorstehend beschrieben verarbeitet.

Dem Fachmann ist aus nachfolgender Beschreibung ersichtlich, dass diese mindestens eine weitere Messstelle einer dritten Messposition zusätzlich zu mindestens einer der vorgenannten Messstellen der ersten und/oder der zweiten Messposition - Auflager 91a, 91b und/oder mindestens eines der Gelenke 16 - vorgesehen sein kann oder auch mindestens eine dieser Messstellen ersetzt. Es ist auch möglich, dass einzelne Messstellen einzelner Messpositionen kombiniert werden, dergestalt, dass z. B. eine Messstelle - z. B. das Auflager 91a - der ersten Messposition mit einer weiteren Messstelle - z. B. eines der Gelenke 16 - der zweiten Messposition und/oder eines oder mehrerer Messstellen der dritten Messposition - also einer oder beider Schwenkeinheiten 26a, 26b - kombiniert werden. Dem Fachmann ist aus vorstehender Beschreibung ersichtlich, dass eine Vielzahl von Möglichkeiten gegeben ist, die einzelnen Messstellen der einzelnen Messpositionen miteinander zu verknüpfen.

Bei einem länglichen Objekt O mit einer symmetrischen Gewichtsverteilung, bei dem also der Gewichtsschwerpunkt des länglichen Objekts O auf seiner Längsachse oder nur gering beabstandet von dieser liegt, ist der Adapter 25 an der Halterung 15 mittig angeordnet, um keine die Transportstabilität beeinflussenden Kippmomente um die Längsachse des Zwischenwagens 3 auftreten zu lassen. Die Längsachse des zu transportierenden Objekts O liegt also etwa in einer Mittelebene des Adapters 25 und somit der Vorrichtung 10. Dies ist oft ausreichend, um einen stabilen Transport des länglichen Objekts O zu ermöglichen.

Insbesondere bei einem Transport von länglichen Objekten O mit einem asymmetrischen Querschnitt, wie zum Beispiel einem Rotorblatt einer Windkraftanlage, liegt aber der Gewichtsschwerpunkt dieses länglichen Objekts O nicht auf seiner Längsachse, sondern seitlich versetzt zu dieser, also außermittig. Bei einem mittig angeordneten Adapter 25 würde die Vorrichtung 10 somit einseitig belastet werden, da der Gewichtsschwerpunkt des länglichen Objekts O nicht in ihrer Mittelebene liegt. Es können somit Kippmomente um die Längsrichtung der Vorrichtung 10 auftreten. Das hat dann zur Folge, dass hierdurch die Kippstabilität zumindest der Vorrichtung 10 und folglich auch diejenige des die Vorrichtung 10 tragenden Fahrzeugs, im beschriebenen Ausführungsbeispiel also die Kippstabilität des Zwischenwagens 3, vermindert ist.

Bei dem beschriebenen Ausführungsbeispiel der Vorrichtung 10 ist nun vorgesehen, dass der Adapter 25 nicht nur mittig, sondern auch außermittig an der Halterung 15, also hier am Rahmen, anordbar ist. Vorzugsweise ist hierzu vorgesehen, dass die Verbindung zwischen Adapter 25 und Halterung 15 so ausgestaltet ist, dass sie nicht nur eine mittige, sondern auch mindestens eine außermittige Anordnung des Adapters 25 an der Halterung 15 ermöglicht.

Bevorzugt wird hierzu, dass die den Adapter 25 und die Halterung 15 verbindende Schwenkeinrichtung 26 und somit die beiden Schwenkeinheiten 26a, 26b derart ausgestaltet sind, dass sie nicht nur vorzugsweise ein Schwenken des Adapters 25 um die durch die Schwenkeinrichtung 26 definierte Schwenkachse, sondern auch und insbesondere ein Versetzen des Adapters 25 in Richtung dieser Schwenkachse ermöglichen. Eine derartige Maßnahme besitzt den Vorteil, dass in einfacher Art und Weise die vorstehend angesprochene asymmetrische Anordnung des Adapters 25 auf der Halterung 15 ermöglicht wird, um damit eine in Bezug auf die Längsachse des länglichen Objekts O vorhandene asymmetrische Gewichtsverteilung auszugleichen, indem der das Objekt O tragende Adapter 25 ebenfalls außermittig angeordnet wird. Da nun der Adapter 25 versetzt zur Halterung 15 und somit zu der Mittelebene der Vorrichtung 10 angeordnet ist, also der Adapter 25 außermittig an der Halterung 15 montiert ist, kann in vorteilhafter Art und Weise erreicht werden, dass auch bei einem außerhalb der Längsachse des länglichen Objekts O liegenden Schwerpunkt das längliche Objekt O derart in der Vorrichtung 10 positioniert werden kann, dass sein Schwerpunkt in der Mitte der Vorrichtung 10 oder zumindest nahe zu dieser liegt. Hierdurch wird in vorteilhafter Art und Weise die Kippstabilität der Vorrichtung 10 und somit des Fahrzeug-Verbunds 1 und folglich dessen Transportsicherheit erhöht.

Am einfachsten ist eine derartige außermittige Anordnung des Adapters 25 zu erreichen, dass an der Halterung 15 und/oder am Adapter 25 eine Anzahl von unterschiedlichen Befestigungsmöglichkeiten für die Schwenkeinheiten 26a und/oder 26b vorgesehen sind, wie zum Beispiel eine Anzahl von in der Querrichtung der Halterung 15 und/oder des Adapters 25 verlaufende Bohrungen, welche eine außermittige Anordnung der beiden Schwenkeinheiten 26a, 26b erlauben. Eine derartige Ausgestaltung besitzt den Vorteil einer besonders einfachen Bauweise.

Bei dem beschriebenen Ausführungsbeispiel ist vorgesehen, dass die Schwenkeinrichtung 26 derart ausgebildet ist, dass der Adapter 25 an der Halterung 15 in unterschiedlichen Positionen mittig und außermittig und vorzugsweise schwenkbar befestigt werden kann, ohne dass es erforderlich ist, die Schwenkeinheiten 26a und/oder 26b hierzu von der Halterung 15 und/oder vom Adapter 25 zu lösen und in einer unterschiedlichen Position neu zu montieren.

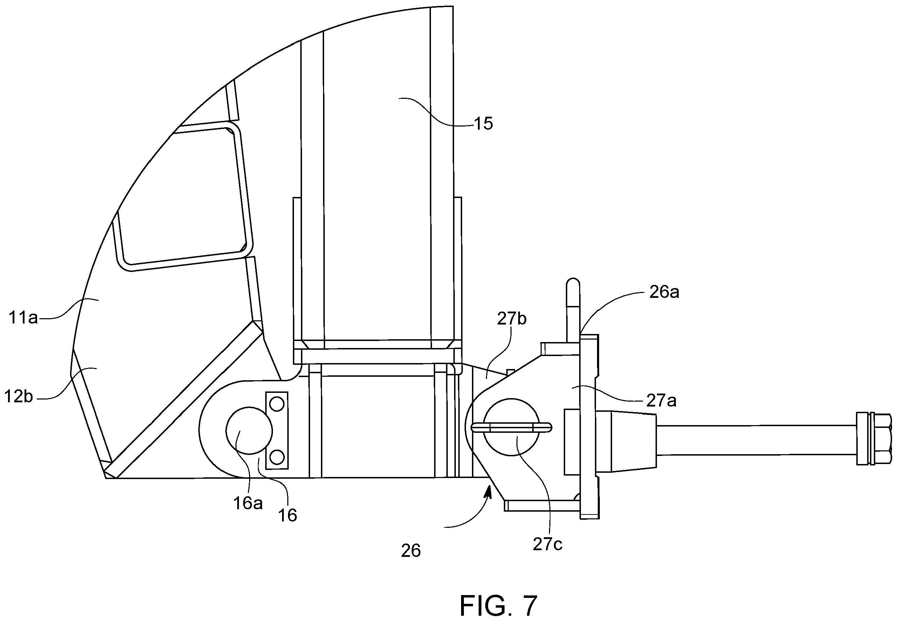

Beim hier beschriebenen Ausführungsbeispiel wird dies dadurch erreicht, dass die den Adapter 25 und die Halterung 15 schwenkbar verbindenden Schwenkeinheiten 26a, 26b jeweils als Lamellen-Kupplungen ausgebildet sind, wie dies am besten aus den Figuren 6 und 7 ersichtlich ist. Die Figur 6 zeigt in einer isometrischen Darstellung die der Halterung 15 zugewandte Seite des Adapters 25 und die Figur 7 ein Detail A der Figur 6. Man erkennt aus diesen Figuren, dass die Schwenkelemente 27a der Schwenkeinheiten 26a, 26b Lamellen 28 aufweisen, zwischen denen jeweils ein Zwischenraum 29 vorhanden ist. Die Schwenkelemente 27b, welche am Rahmen angeordnet sind, weisen ebenfalls eine Lamelle oder mehrere durch Zwischenräume getrennte Lamellen auf. Durch ein Einschieben der Lamellen 28 der Schwenkelemente 27a in die Zwischenräume zwischen den Lamellen der Schwenkelemente 27b und durch ein Verriegeln der dann ineinandergreifenden Schwenkelemente 27a, 27b, zum Beispiel durch Einschieben der Bolzen 27c in die Öffnungen 30 der jeweiligen Schwenkeinheit 26a, 26b, wird die Schwenkverbindung 26 zwischen dem Rahmen und dem Adapter 25 ausgebildet.

Um nun eine zu einer mittigen Position versetzte Anordnung des Adapters 25 auf der Halterung 15 zu ermöglichen, ist beim beschriebenen Ausführungsbeispiel vorgesehen, dass mindestens eines der beiden Schwenkelemente 27a in mindestens zwei unterschiedlichen Positionen in das mit diesen zusammenwirkende Schwenkelement 27b eingesetzt werden kann, so dass hierdurch eine außermittige Anordnung des Adapters 25 auf der Halterung 15 erreichbar ist.

Es wird aber bevorzugt, dass es die beschriebene Schwenkeinrichtung 26 erlaubt, den Adapter 25 in mehr als einer außermittigen Position relativ zur Halterung 15 zu positionieren. Hierzu wird bevorzugt, dass die an dem Adapter 25 angeordneten Schwenkelemente 27a jeweils eine hinreichend große Zahl von jeweils durch einen Zwischenraum 29 getrennten Lamellen 28 aufweisen, in welche die entsprechenden Lamellen der zu diesen Schwenkelementen 27a komplementären Schwenkelemente 27b eingreifen können.

Beim beschriebenen Ausführungsbeispiel ist exemplarisch vorgesehen, dass - wie aus den Figuren 8 und 9 ersichtlich - die Schwenkelemente 27a jeweils vier Lamellen 28 besitzen. Nimmt man nun an, dass die Schwenkelemente 27b welche an der Halterung 15 angeordnet sind, jeweils zwei Lamellen besitzen, so werden dann vier unterschiedliche Positionen ausgebildet, in denen der Adapter 25 an der Halterung 15 befestigt werden kann. Dem Fachmann ist aus der vorstehenden Beschreibung ersichtlich, dass die hier aufgeführte Konstellation von vier Lamellen 28 an den Schwenkelementen 27a des Adapters 25 und zwei Lamellen an den Schwenkelementen 27b nur exemplarischen Charakter besitzt. Es können, je nach Anwendungsfall, mehr oder weniger durch Zwischenräume 29 getrennte Lamellen 28 der Schwenkelemente 27a und/oder mit diesen zusammenwirkende Lamellen der Schwenkelemente 27b vorgesehen sein, so dass - entsprechend der Anzahl der Lamellen 28 der Schwenkelemente 27a und der Lamellen der Schwenkelemente 27b - mindestens zwei, drei oder mehr als drei unterschiedliche Positionen, in denen der Adapter 25 versetzt angeordnet werden kann, ausgebildet werden.

Es ist auch möglich, die vorstehend genannte Ausgestaltung umzukehren, das heißt, dass die an der Halterung 15 angeordneten Schwenkelemente 27b eine größere Zahl von Lamellen aufweisen als die am Adapter 25 vorhandenen Lamellen 28. Es ist daher nicht zwingend, dass - wie beim hier beschriebenen Ausführungsbeispiel - an dem Adapter 25 mehr Lamellen 28 vorgesehen sind als an der Halterung 15. Es ist natürlich auch möglich, dass an der Halterung 15 zwei oder mehr Lamellen, die durch Zwischenräume getrennt sind, vorgesehen sind, und am Adapter 25 nur eine einzige Lamelle 28 oder zwei oder mehr durch Zwischenräume 29 getrennte Lamellen 28 vorgesehen sind. Es ist somit ausreichend, dass mindestens ein Schwenkelement 27a und/oder mindestens ein hierzu komplementäres Schwenkelement 27b mindestens zwei durch einen Zwischenraum getrennte Lamellen aufweist, so dass hierdurch der Adapter 25 an der Halterung 15 in mindestens zwei Positionen, von denen eine eine außermittige Position ist, anordbar ist.

Dem Fachmann ist aus der obigen Beschreibung auch ersichtlich, dass die hier dargestellte beschriebene Art und Weise, wie eine versetzte Anordnung des Adapters 25 an der Halterung 15 realisiert ist, nur einen exemplarischen Charakter besitzt. Vielmehr ist eine Vielzahl von derartigen Ausgestaltungen möglich. Es ist zwar nicht bevorzugt, aber möglich, dass auf die Schwenkbarkeit des Adapters 25 relativ zur Halterung 15 verzichtet wird. Wesentlich ist, dass der Adapter 25 außermittig an der Halterung 15 angeordnet werden kann.

Es ist auch möglich, dass vorgesehen ist, dass der Adapter 25 nicht, wie bei der vorstehend beschriebenen Ausgestaltung - in diskreten Abständen an der Halterung 15 in unterschiedlichen Positionen befestigbar ist. Vielmehr ist es auch möglich, eine kontinuierlich veränderbare außermittige Anordnungsmöglichkeit des Adapters 25 vorzusehen. Eine derartige kontinuierliche Anordnung der Schwenkelemente 27a, 27b ist z. B. dadurch möglich, indem zum Beispiel mindestens einer dieser Schwenkelemente auf einem verschiebbaren Schlitten gelagert ist. Die vorgenannte Möglichkeit - ein verschiebbarer Schlitten - besitzt außerdem den Vorteil, dass hierdurch ein selbsttätiger oder zumindest weitgehend selbsttätiger Ausgleich von während des Transports (einschließlich der Montage des länglichen Objekts O am Adapter 25) auftretenden asymmetrischen Belastungen der Vorrichtung 10 und somit des Fahrzeugs 1 durchgeführt werden kann. Hierzu ist vorgesehen, dass der mindestens eine Schlitten eine Verschiebeeinheit (nicht gezeigt) aufweist, durch welche der Schlitten und vorzugsweise beide Schlitten entlang der Halterung 15 verschiebbar sind. Durch eine entsprechende Ansteuerung des oder der Schlitten durch das von der Steuer- und/oder Auswerteeinrichtung erzeugten Steuersignals kann dann in einfacher Art und Weise - entsprechend der von den Belastungssensoren erfassten asymmetrischen Lastverteilung - durch eine entsprechende Verschiebebewegung der Schlitten und somit des vom Adapter 25 gehaltenen länglichen Objekts O eine entsprechende Korrekturbewegung durchgeführt werden.

Auch eine Kombination der vorgenannten Möglichkeiten, insbesondere unterschiedliche Befestigungspunkte an der Halterung 15 und/oder am Adapter 25 und gleichzeitig eine Ausgestaltung der Schwenkelemente 27a, 27b wie vorstehend beschrieben vorzusehen, ist möglich.

Wie am besten aus den Figuren 2 und 3 ersichtlich, weist die Halterung 15 an ihrer oberen, den Schwenkeinheiten 26a, 26b gegenüberliegenden Seite Anschlagelemente 191a und 191b auf, an denen sich der obere Teil des Adapters 25 abstützt. Diese Anschlagelemente 191a, 191b bilden somit ein Widerlager für den Adapter 25 aus. Eine derartige Konstruktion besitzt den Vorteil, dass auf den Adapter 25 nur Druckkräfte einwirken, er also nicht dafür ausgelegt sein muss, auch Zugkräfte aufzunehmen. Ein weiterer Vorteil einer derartigen Konstruktion, nämlich, dass die Halterung 15 mit dem Adapter 25 durch an der unteren Seite der Halterung 15 und folglich an der Unterseite des Adapters 25 angeordnete Schwenkeinheiten 26a, 26b verbunden ist, ist darin zu sehen, dass zum Koppeln vom Adapter 25 und Halterung 15 Montagearbeiten nur im unteren Bereich derselben vorgenommen werden müssen. Beachtet man nun, dass der typische Durchmesser von länglichen Objekten wie Rotorblättern einige Meter beträgt, so bringen die vorgenannten Maßnahmen den Vorteil mit sich, dass Montagearbeiten im oberen Bereich des das zu transportierenden Objekt O aufnehmenden Adapters 25 und/oder des Rahmens entfallen können, was die Arbeitssicherheit beträchtlich erhöht.

Zusammenfassend ist festzuhalten, dass durch die beschriebenen Maßnahmen eine Vorrichtung 10 ausgebildet wird, welche sich dadurch auszeichnet, dass durch eine Erfassung einer asymmetrischen Belastung der Vorrichtung 10 und somit eines diese Vorrichtung 10 verwendenden Fahrzeugs 1 durch mindestens eine außerhalb der mit der Vorrichtung 10 angeordnete Messstelle mindestens einer Messposition ermöglicht wird. Vorzugsweise ist vorgesehen, dass mindestens eine Messstelle mindestens einer Messposition als eine Dreh- oder Schwenkverbindung zwischen einer ersten Komponente der Vorrichtung 10 und einer von dieser getragenen zweiten Komponente ausgebildet ist, wobei bevorzugt wird, dass als Belastungssensor ein diese beiden Komponenten verbindender Messbolzen verwendet wird.

## Patentansprüche

1. Vorrichtung zum Halten eines Endes (E) eines länglichen Objekts (O), insbesondere einer selbsttragenden Last, die ein Grundgestell (11) aufweist, auf dem eine Halterung (15), an welcher das längliche Objekt (O) befestigbar ist, schwenkbar angeordnet ist, und die vorzugsweise mindestens eine Betätigungseinrichtung (20) aufweist, durch welche die Halterung (15) relativ zum Grundgestell (11) schwenkbar ist, **dadurch gekennzeichnet, dass** die Vorrichtung (10) an mindestens einer außermittig angeordneten Messstelle mindestens einer Messposition einen Belastungssensor aufweist, durch den eine asymmetrische Belastung der Vorrichtung (10) durch das zu haltende längliche Objekt (O) erfassbar ist.

2. Vorrichtung nach Anspruch 1, **dadurch gekennzeichnet, dass** das Grundgestell (11) an mindestens einem Auflager (91a, 91b) gelagert ist, und dass das oder mindestens eines der Auflager (91a, 91b) als ein Belastungssensor ausgebildet ist oder einen Belastungssensor aufweist, und dass durch den mindestens einen Belastungssensor mindestens eine Messstelle einer ersten Messposition ausgebildet ist.

3. Vorrichtung nach Anspruch 2, **dadurch gekennzeichnet, dass** mindestens ein Auflager (91a, 91b) als eine Schwenkverbindung ausgebildet ist, mittels derer das Grundgestell (11) relativ zum Auflager (91a, 91b) verschwenkbar ist, dass zumindest ein Auflager (91a, 91b) und das Grundgestell (11) mittels eines Messbolzens miteinander verbunden sind.

4. Vorrichtung nach einem der vorangehenden Ansprüche, **dadurch gekennzeichnet, dass** die Halterung (15) und das Grundgestell (11) über mindestens ein Gelenk (16) verbunden sind, dass das mindestens eine Gelenk (16) mindestens eine Messstelle einer zweiten Messposition ausbildet, und dass vorzugsweise mindestens ein Gelenk (16) mindestens einen als Messbolzen (16a) ausgebildeten Belastungssensor aufweist.

5. Vorrichtung nach einem der vorangehenden Ansprüche, **dadurch gekennzeichnet, dass** die Vorrichtung (10) einen das längliche Objekt (O) haltenden, an der Halterung (15) angeordneten Adapter (25) aufweist, dass der Adapter (25) an der Halterung (15) mittels einer Schwenkeinrichtung (26) schwenkbar angeordnet ist, dass die Schwenkeinrichtung (26) mindestens eine Schwenkeinheit (26a, 26b) besitzt, und dass durch die oder mindestens eine der Schwenkeinheiten (26a, 26b) mindestens eine Messstelle einer dritten Messposition ausgebildet ist.

6. Vorrichtung nach einem der vorangehenden Ansprüche, **dadurch gekennzeichnet, dass** am Adapter (25) mindestens ein Schwenkelement (27a) der mindestens einen Schwenkeinheit (26a, 26b) und an der Halterung (15) mindestens ein komplementär hierzu ausgebildetes Schwenkelement (27b) dieser mindestens einen Schwenkeinheit (26a, 26b) vorgesehen ist, dass die beiden Schwenkelemente (27a, 27b) mindestens einer Schwenkeinheit (26a, 26b) durch einen Bolzen (27c) verbunden sind, dass der Bolzen (27c) mindestens einer Schwenkeinheit (26a, 26b) als ein Belastungssensor zur Ausbildung mindestens einer Messstelle mindestens einer dritten Messposition der Vorrichtung (10) ausgebildet ist, und dass mindestens eines der beiden Schwenkelemente (27a bzw. 27b) am anderen Schwenkelemente (27b bzw. 27a) vorzugsweise in mindestens zwei Positionen anordbar ist.

7. Vorrichtung nach einem der vorangehenden Ansprüche, **dadurch gekennzeichnet, dass** der Adapter (25) in mindestens einer außermittigen Position in diskreten Abständen oder kontinuierlich veränderbar an der Halterung (15) angeordnet ist.

8. Vorrichtung nach einem der vorangehenden Ansprüche, **dadurch gekennzeichnet, dass** mindestens ein Sensorsignal mindestens einer Messstelle mindestens einer Messposition zu einer Steuer- und/oder Auswerteeinrichtung geführt ist, und dass diese Steuer- und/oder Auswerteeinrichtung mindestens ein Anzeigesignal und/oder mindestens ein Steuersignal erzeugt.

9. Vorrichtung nach einem der vorangehenden Ansprüche, **dadurch gekennzeichnet, dass** das von der Steuer- und/oder Auswerteeinrichtung erzeugte mindestens eine Steuersignal eine Kompensationsmaßnahme einer Komponente der Vorrichtung (10) und/oder der Vorrichtung (10) selbst und/oder eines die Vorrichtung (10) verwendenden Fahrzeugs erzeugt.

10. Vorrichtung nach einem der vorangehenden Ansprüche, **dadurch gekennzeichnet, dass** das Grundgestell (11) der Vorrichtung (10) beweglich auf dem die Vorrichtung (10) tragenden Fahrzeug angeordnet ist.

11. Vorrichtung nach einem der vorangehenden Ansprüche, **dadurch gekennzeichnet, dass** der Adapter (25) über mindestens einen Schlitten verschiebbar an der Halterung (15) angeordnet ist, dass der mindestens eine Schlitten eine Verschiebeeinrichtung aufweist, mittels derer der Adapter (25) entlang der Halterung (15) verschiebbar ist, und dass der Verschiebeeinrichtung des mindestens einen Schlittens das von der Steuer- und/oder Auswerteeinrichtung erzeugte Steuersignal zugeführt ist.

12. Vorrichtung nach einem der vorangehenden Ansprüche, **dadurch gekennzeichnet, dass** der Adapter (25) und/oder der Halterung (15) der Vorrichtung (10) mindestens ein Befestigungsmittel aufweist, durch welche mindestens ein Schwenkelement (27a, 27b) mindestens einer Schwenkeinheit (26a, 26b) in mindestens einer außermittigen Position am Adapter (25) und/oder an der Halterung (15) befestigbar ist.

13. Fahrzeug zum Transport eines länglichen Objekts (O), das eine Vorrichtung (10) zum Halten eines Endes (E) des länglichen Objekts (O) aufweist, **dadurch gekennzeichnet, dass** die Vorrichtung (10) nach einem der Ansprüche 1 bis 12 ausgebildet ist.

## Claims

1. Apparatus for retaining an end (E) of an elongate object (O), in particular of a self-supporting load, which has a base frame (11) on which a bracket (15) to which the elongate object (O) can be secured is pivotably arranged, and which preferably has at least one actuation device (20) by means of which the bracket (15) can be pivoted relative to the base frame (11), **characterised in that** the apparatus (10) has at at least one eccentrically arranged measurement location of at least one measurement position a load sensor by means of which an asymmetric loading of the apparatus (10) by the elongate object (O) which is intended to be retained can be detected.

2. Apparatus according to claim 1, **characterised in that** the base frame (11) is supported on at least one support (91a, 91b), and **in that** the support or at least one of the supports (91a, 91b) is in the form of a load sensor or has a load sensor, and **in that** at least one measurement location of a first measurement position is formed by the at least one load sensor.

3. Apparatus according to claim 2, **characterised in that** at least one support (91a, 91b) is in the form of a pivot connection, by means of which the base frame (11) can be pivoted relative to the support (91a, 91b) and **in that** at least one support (91a, 91b) and the base frame (11) are connected to each other by means of a measurement pin.

4. Apparatus according to any one of the preceding claims, **characterised in that** the bracket (15) and the base frame (11) are connected by means of at least one articulation (16), **in that** the at least one articulation (16) forms at least one measurement location of a second measurement position, and **in that** preferably at least one articulation (16) has at least one load sensor which is in the form of a measurement pin (16a) .

5. Apparatus according to any one of the preceding claims, **characterised in that** the apparatus (10) has an adapter (25) which retains the elongate object (O) and which is arranged on the bracket (15), **in that** the adapter (25) is pivotably arranged on the bracket (15) by means of a pivot device (26), **in that** the pivot device (26) has at least one pivot unit (26a, 26b) and **in that**, as a result of the or at least one of the pivot units (26a, 26b), at least one measurement location of a third measurement position is formed.

6. Apparatus according to any one of the preceding claims, **characterised in that** on the adapter (25) at least one pivot element (27a) of the at least one pivot unit (26a, 26b) and on the bracket (15) at least one complementarily constructed pivot element (27b) of this at least one pivot unit (26a, 26b) are provided, **in that** the two pivot elements (27a, 27b) of at least one pivot unit (26a, 26b) are connected by means of a pin (27c), **in that** the pin (27c) of at least one pivot unit (26a, 26b) is in the form of a load sensor for forming at least one measurement location of at least a third measurement position of the apparatus (10) and **in that** at least one of the two pivot elements (27a or 27b) can be arranged on the other pivot element (27b or 27a) preferably in at least two positions.

7. Apparatus according to any one of the preceding claims, **characterised in that** the adapter (25) is arranged on the bracket (15) in at least one eccentric position with discrete spacings or so as to be able to be continuously variable.

8. Apparatus according to any one of the preceding claims, **characterised in that** at least one sensor signal of at least one measurement location of at least one measurement position is guided to a control and/or evaluation device, and **in that** this control and/or evaluation device produces at least one display signal and/or at least one control signal.

9. Apparatus according to any one of the preceding claims, **characterised in that** the at least one control signal produced by the control and/or evaluation device produces a compensation measure of a component of the apparatus (10) and/or the apparatus (10) itself and/or a vehicle which is using the apparatus (10).

10. Apparatus according to any one of the preceding claims, **characterised in that** the base frame (11) of the apparatus (10) is movably arranged on the vehicle which carries the apparatus (10).

11. Apparatus according to any one of the preceding claims, **characterised in that** the adapter (25) is displaceably arranged on the bracket (15) by means of at least one carriage, **in that** the at least one carriage has a displacement device by means of which the adapter (25) can be displaced along the bracket (15), and **in that** the control signal produced by the control and/or evaluation device is supplied to the displacement device of the at least one carriage.

12. Apparatus according to any one of the preceding claims, **characterised in that** the adapter (25) and/or the bracket (15) of the apparatus (10) has at least one securing means by way of which at least one pivot element (27a, 27b) of at least one pivot unit (26a, 26b) can be secured in at least one eccentric position on the adapter (25) and/or on the bracket (15) .

13. Vehicle for transporting an elongate object (O) which has an apparatus (10) for retaining an end (E) of the elongate object (O), **characterised in that** the apparatus (10) is constructed according to any one of claims 1 to 12.

## Revendications

1. Dispositif de maintien d'une extrémité (E) d'un objet allongé (O), plus particulièrement d'une charge autoportante, qui comprend un châssis de base (11) sur lequel un support (15), auquel l'objet allongé (O) peut être fixé, est disposé de manière pivotante, et qui comprend de préférence au moins un dispositif d'actionnement (20) à l'aide duquel le support (15) peut être pivoté par rapport au châssis de base (11), **caractérisé en ce que** le dispositif (10) comprend, au niveau d'au moins un point de mesure excentrée d'au moins une position de mesure, un capteur de charge à l'aide duquel une sollicitation asymétrique du dispositif (10) par l'objet allongé (O) à maintenir peut être mesurée.

2. Dispositif selon la revendication 1, **caractérisé en ce que** le châssis de base (11) est logé au niveau d'au moins un appui (91a, 91b) et **en ce que** le ou au moins un des appuis (91a, 91b) est conçu comme un capteur de charge ou comprend un capteur de charge et **en ce que**, à l'aide de l'au moins un capteur de charge, au moins un point de mesure d'une première position de mesure est créé.

3. Dispositif selon la revendication 2, **caractérisé en ce qu'**au moins un appui (91a, 91b) est conçu comme une liaison pivotante, au moyen de laquelle le châssis de base (11) peut être pivoté par rapport à l'appui (91a, 91b), **en ce que** qu'au moins un appui (91a, 91b) et le châssis de base (11) sont reliés entre eux au moyen d'un axe dynamométrique.

4. Dispositif selon l'une des revendications précédentes, **caractérisé en ce que** le support (15) et le châssis de base (11) sont reliés par l'intermédiaire d'au moins une articulation (16), **en ce que** l'au moins une articulation (16) constitue au moins un point de mesure d'une deuxième position de mesure et **en ce que**, de préférence, au moins une articulation (16) comprend au moins un capteur de charge conçu comme un axe dynamométrique (16a).

5. Dispositif selon l'une des revendications précédentes, **caractérisé en ce que** le dispositif (10) comprend un adaptateur (25) disposé sur le support (15), qui maintient l'objet allongé (O), **en ce que** l'adaptateur (25) est disposé de manière pivotante sur le support (15) au moyen d'un dispositif de pivotement (26), **en ce que** le dispositif de pivotement (26) comprend au moins une unité de pivotement (26a, 26b) et **en ce que** la ou au moins une des unités de pivotement (26a, 26b) constitue au moins un point de mesure d'une troisième position de mesure.

6. Dispositif selon l'une des revendications précédentes, **caractérisé en ce que**, sur l'adaptateur (25), est disposé au moins un élément de pivotement (27a) de l'au moins une unité de pivotement (26a, 26b) et, sur le support (15), est prévu au moins un élément de pivotement (27b), conçu de manière complémentaire à celui-ci, de cette au moins une unité de pivotement (26a, 26b), **en ce que** les deux éléments de pivotement (27a, 27b) d'au moins une unité de pivotement (26a, 26b) sont reliés par une tige (27c), **en ce que** la tige (27c) d'au moins une unité de pivotement (26a, 26b) est conçue comme un capteur de charge pour la création d'au moins un point de mesure d'au moins une troisième position de mesure du dispositif (10) et **en ce qu'**au moins un des deux éléments de pivotement (27a respectivement 27b) sur l'autre élément de pivotement (27b respectivement 27a) peut être disposé de préférence dans au moins deux positions.

7. Dispositif selon l'une des revendications précédentes, **caractérisé en ce que** l'adaptateur (25) est disposé dans au moins une position excentrée à des distances discrètes ou de manière variable en continu sur le support (15).

8. Dispositif selon l'une des revendications précédentes, **caractérisé en ce qu'**au moins un signal de capteur d'au moins un point de mesure d'au moins une position de mesure est guidé vers un dispositif de commande et/ou d'analyse et **en ce que** ce dispositif de commande et/ou d'analyse génère au moins un signal d'affichage et/ou au moins un signal de commande.

9. Dispositif selon l'une des revendications précédentes, **caractérisé en ce que** l'au moins un signal de commande généré par le dispositif de commande et/ou d'analyse génère une mesure de compensation d'un composant du dispositif (10) et/ou du dispositif (10) lui-même et/ou d'un véhicule utilisant le dispositif (10).

10. Dispositif selon l'une des revendications précédentes, **caractérisé en ce que** le châssis de base (11) du dispositif (10) est disposé de manière mobile sur le véhicule supportant le dispositif (10).

11. Dispositif selon l'une des revendications précédentes, **caractérisé en ce que** l'adaptateur (25) est disposé de manière coulissante sur le support (15) par l'intermédiaire d'un chariot, **en ce que** l'au moins un chariot comprend un dispositif de coulissement au moyen duquel l'adaptateur (25) peut être coulissé le long du support (15) et **en ce que** le signal de commande généré par le dispositif de commande et/ou d'analyse est transmis au dispositif de coulissement de l'au moins un chariot.

12. Dispositif selon l'une des revendications précédentes, **caractérisé en ce que** l'adaptateur (25) et/ou le support (15) du dispositif (10) comprend au moins un moyen de fixation à l'aide duquel au moins un élément de pivotement (27a, 27b) d'au moins une unité de pivotement (26a, 26b) peut être fixé dans au moins une position excentrée sur l'adaptateur (25) et/ou sur le support (15).

13. Véhicule pour le transport d'un objet allongé (O) qui comprend un dispositif (10) pour le maintien d'une extrémité (E) de l'objet allongé (O), **caractérisé en ce que** le dispositif (10) est conçu selon l'une des revendications 1 à 12.
